# EUROPÄISCHE PATENTSCHRIFT

(11) **EP 3 245 066 B1**
(45) Veröffentlichungstag und Bekanntmachung des Hinweises auf die Patenterteilung: **20.02.2019**
(21) Anmeldenummer: 16797722.2
(22) Anmeldetag: 20.10.2016
(51) Int. Cl.: B32B 38/18, B30B 15/30

(54) **VORRICHTUNG UND VERFAHREN ZUM DECKUNGSGLEICHEN LEGEN VON IN EINER PRESSE MITEINANDER ZU VERPRESSENDEN WERKSTÜCKSCHICHTEN**
APPARATUS AND METHOD FOR CONGRUENT LAYING OF WORKPIECE LAYERS TO BE PRESSED TOGETHER IN A PRESS
DISPOSITIF ET PROCÉDÉ DE POSE COÏNCIDENTE DE COUCHES DE PIÈCE DEVANT ÊTRE ASSEMBLÉES PAR PRESSION LES UNES AUX AUTRES DANS UNE PRESSE

(30) Priorität: 30.10.2015 DE 102015118601
(43) Veröffentlichungstag der Anmeldung: 22.11.2017
(73) Patentinhaber: Wemhöner Surface Technologies GmbH & Co. KG, 32052 Herford (DE)
(72) Erfinder: BARTH, Florian, 32130 Enger (DE); BERGHAHN, Uwe, 32760 Detmold (DE)
(74) Vertreter: Rolf, Gudrun
(86) Internationale Anmeldenummer: PCT/DE2016/100492
(87) Internationale Veröffentlichungsnummer: WO 2017/071683

(56) Entgegenhaltungen:
- EP-A1- 2 700 511
- DE-A1-102005 009 835
- DE-A1-102005 020 456
- DE-B4- 10 146 304

## Beschreibung

Die Erfindung betrifft eine Vorrichtung und ein Verfahren zum deckungsgleichen Legen von in einer Presse miteinander zu verpressenden Werkstückschichten gemäß den Oberbegriffen der Patentansprüche 1 und 6.

Es ist bereits ein Verfahren und eine Vorrichtung zum exakten Legen von Beschichtungsmaterial auf in einer Presse zu beschichtenden Trägerplatten bekannt, DE 101 46 304 B4, welches die Lage eines oberen Beschichtungsmaterials bereits auf einer Legestation detektiert, sodass es korrekt auf der Oberfläche einer auf einer Legestraße aufliegenden Trägerplatte positioniert werden kann, deren Lage ebenfalls bereits von einem Kamerasystem erfasst wurde, sodass insgesamt eine optimale Ablageposition für das obere Beschichtungsmaterial errechnet und die Ablage optimal ausgerichtet erfolgen kann.

Nachteilig an dem bekannten Verfahren und der bekannten Vorrichtung ist, dass die Lage des bogenförmigen unteren Beschichtungsmaterials nicht so exakt erfasst werden kann, wie die Lage des oberen Beschichtungsmaterials, sodass in einer Presse mit oberen und unteren strukturierten Pressblechen nur selten eine vollständig druck- und prägekonforme Oberfläche erzielt werden kann. Des Weiteren erfolgt das Umsetzen der Beschichtungsmaterialien jeweils bei ruhender Legestraße, sodass das jeweilige Anfahren, Beschleunigen und Abbremsen der Werkstückstapel zu einem Verrutschen der einzelnen Werkstückschichten führen kann, wodurch die zuvor erfolgte Ausrichtung der Dekorpapiere und dem Trägermaterial zueinander bis zum Erreichen der Presse doch wieder voneinander differieren kann. Weiterhin erzeugen der oftmalige Stillstand der Legestraße sowie die permanenten Anfahr- und Abbremsvorgänge unwirtschaftliche Produktionszeiten, sodass das gesamte Verfahren aufgrund seiner oftmaligen Unterbrechungen nur unnötig langsam ablaufen kann.

Aufgabe der Erfindung ist es, ein Verfahren und eine Vorrichtung zum deckungsgleichen Legen von in einer Presse miteinander zu verpressenden Werkstückschichten zur Verfügung zu stellen, die bei gesteigerter Prozessgeschwindigkeit eine gesteigerte Genauigkeit beim gleichzeitigen beidseitig deckungskonformen Prägen ermöglichen.

Die Lösung dieser Aufgabe erfolgt in Verbindung mit den Oberbegriffsmerkmalen der Patentansprüche 1 und 6 erfindungsgemäß aus deren kennzeichnenden Teilen.

Die Vorrichtung, die aus einer Legestraße sowie mindestens jeweils aus einer Legestation für unteres Beschichtungsmaterial, einer Trägerplatte und einem oberen Beschichtungsmaterial sowie aus verschiedenen Kamerasystemen zur Lageerkennung der einzelnen Werkstückschichten und der einzelnen Werkstückstapel besteht, zeichnet sich insbesondere dadurch aus, dass jeder Legestation mindestens eine Umsetzvorrichtung für eine Werkstückschicht zugeordnet ist, die mehrere räumliche Freiheitsgrade in verschiedene Raumrichtungen sowie einen Aufnehmer für die Werkstückschicht sowie ein ortsfestes Kamerasystem an der Legestation und/ oder ein mitbewegtes am Aufnehmer aufweist und dass die Legestraße kontinuierlich angetrieben ist, wobei die Werkstückschichten kontinuierlich darauf oder auf zuvor darauf auflegte Werkstückschichten passend ausgerichtet mitbewegt abgelegt werden können. Das untere und das obere bogenförmige Beschichtungsmaterial kann also bereits in einer von einem Arbeitsmagazin separierten Lage auf der Legestation entsprechend seiner tatsächlichen aktuellen Lage detektiert werden, sodass es durch eine Zusammenführung der durch die Kamerasysteme erzeugten Lagedaten in einen übergeordneten Rechnersystem möglich ist, alle Werkstückschichten, angefangen von einer unteren bis hin zur letzten oberen, passgenau so übereinander zu stapeln, dass sie ebenso passgenau zwischen dem oberen und dem unteren Pressblech einer Presse positioniert werden können, deren Positionen ebenfalls von einem Messsystem erkannt und abgespeichert wurden.

Ganz besonders vorteilhaft an der erfinderischen Löschung ist, dass das Verfahren vollkommen unterbrechungsfrei ablaufen kann und nicht auf den exakten Geradeauslauf des Legebandes angewiesen ist, da die jeweiligen Umsetzvorrichtungen entweder bogenförmiges Beschichtungsmaterial oder eine Trägerplatte von einer Legestation abnehmen und auf das kontinuierlich laufende Band einer Legestraße bzw. auf bereits darauf aufgelegte Werkstückschichten passgenau auflegen können, wobei während des Auflegens keine horizontalen Relativgeschwindigkeiten dazwischen vorhanden sind.

Dies führt zu einer wesentlichen Prozessbeschleunigung, ebenso wie die einmal erreichte Ablagegenauigkeit nicht dadurch zunichte gemacht wird, dass die Legestraße wiederholt abgebremst und beschleunigt wird, sodass die übereinander gestapelten Werkstückschichten nicht wieder verrutschen können. Ein weiterer Vorteil besteht in dem zusätzlichen Vorhandensein von weiteren Kamerasystemen, die oberhalb der Legestraße angeordnet sind, sodass auch die jeweiligen Positionen der weiterbewegten Werkstückstapel exakt bekannt sind, ebenso wie ein Kamerasystem oberhalb des Beschickwagens vor der Presse angeordnet sein kann, sodass letztendlich die Positionen der Werkstückstapel vollständig überwacht und bekannt sind, wodurch ein gleichzeitig beidseitiges deckungskonformes Prägen in einer mit Strukturen versehenen Pressblechen ausgestatten Presse ermöglicht wird, da auch deren Positionen exakt bekannt und abgespeichert sind.

Weitere vorteilhafte Ausgestaltungen des Gegenstandes der Erfindung ergeben sich mit und in Kombination aus den nachfolgenden Unteransprüchen insbesondere dadurch, dass zumindest die Aufnehmer der Beschichtungsmaterialien entweder als großflächige plane und ebene Vakuumplatten oder als Saugrahmen mit einer Vielzahl von Einzelsaugern ausgebildet sind, sodass das unter einem solchen Aufnehmer angesaugte Beschichtungsmaterial schnell und insbesondere in jede beliebige Richtung bewegbar ist, ohne Falten werfen, gedehnt oder gestaucht werden zu können.

Ein weiterer Vorteil solcher Aufnehmer besteht darin, dass sie das Beschichtungsmaterial nicht nur parallel auf der Oberfläche der Legestraße oder auf ein bereits darauf aufliegendes Werkstück auflegen können, sondern dies auch aus einer antiparallelen Schräglage heraus beginnen können, sodass etwa durch ein schräges Aufsetzen des Aufnehmers mit einer in Laufrichtung nach vorne gerichteten Seite der Vakuumplatte und nachfolgendem parallelem Anlegen etwa auf die darunterliegende Trägerplatte ein sicheres und schnelles Entfernen der Luft zwischen den beteiligten Werkstückschichten erzielt wird, wodurch zusätzlich die Prozesssicherheit gesteigert wird.

Entsprechend einer weiteren vorteilhaften Ausführungsform der Erfindung ist die Vorrichtung für Werkstückstapel mit zwei oder mehr Teillängen der wirksamen Länge einer Presse mit mehrere Legestationen an der Legestraße ausgestattet, mittels derer gemeinsam in der Presse zu verpressende Werkstückstapel bereits auf der Legestraße in Abhängigkeit der Pressplatten der Presse passend eng hintereinander auf der Legestraße aufgelegt werden können, sodass sie schon dort synchron zu den konturierten Pressblechen der Presse angeordnet sind und nicht erst kurz vor der Presse auf einer Beschickvorrichtung entsprechend angeordnet werden müssen.

Das mit der erfinderischen Vorrichtung durchführbare erfinderische Verfahren läuft derart ab, dass die Kamerasysteme an den Legestationen oder an den Aufnehmern bereits die Ursprungsposition jeder von einer Legestation aufzunehmenden Werkstückschicht detektieren und speichern und die Werkstückschichten dann bereits passend ausgerichtet auf die kontinuierlich laufende Legestraße oder bereits darauf aufliegende Werkstückschichten ablegen, wobei die Lagen der Werkstückstapel von weiteren ortsfest an der Legestraße angeordneten Kamerasystemen detektiert werden können, welche zusammen mit den anderen Kamerasystemen an den Legestationen oder den Aufnehmern und auch weiteren zu einem übergeordneten Kameraleitsystem zusammengefasst sind.

Die Vakuumplatten einer Werkstückschicht legen diese entweder parallel zur Oberfläche der Legestraße oder auf eine bereits darauf aufliegende Werkstückschicht auf oder zunächst eine Seitenkante oder Ecke, woraufhin die Vakuumplatte in eine zu bereits aufliegenden Werkstück liegende parallele Ablageposition verschwenkt, wodurch zwischen den Werkstückschichten vorhandene Luft verdrängt wird.

Entsprechend einer bevorzugten Ausführungsform des erfinderischen Verfahrens wird die Lage der Werkstückstapel nochmals bei geöffneter Presse zwischen den Pressblechen korrigiert, deren Lage ebenfalls von einem Kamerasystem aufgenommen und mit der tatsächlichen Lage der Werkstückstapel in Einklang gebracht wird, sodass das Dekorbild und die Struktur der Pressbleche des unteren und des oberen bogenförmigen Beschichtungsmaterials und der Pressbleche sicher und beliebig oft wiederholbar druck- und prägekonform übereinstimmt.

Nachfolgend werden die Vorrichtung und das Verfahren anhand von Figuren näher beschrieben. Es zeigen:
- Fig. 1: eine skizzierte Draufsicht auf die Legevorrichtung,
- Fig. 2: eine Darstellung des Verfahrensablaufes jeder der drei Legestationen gemäß Fig. 1, und

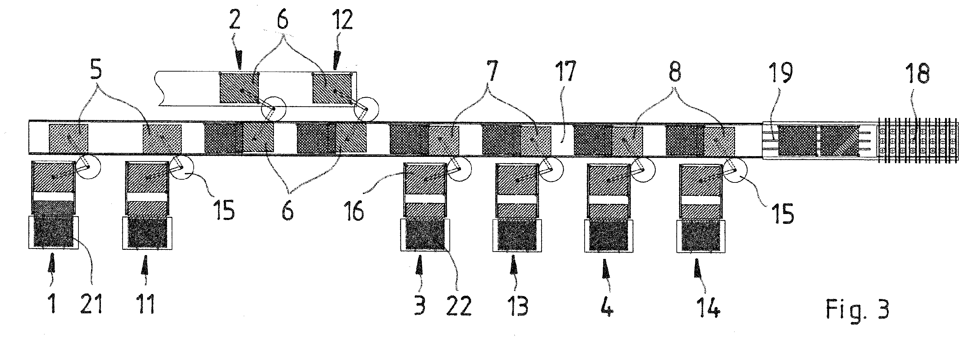

- Fig. 3: eine Draufsicht auf eine erweiterte Legevorrichtung mit einer unterschiedlichen Anzahl von Legestationen für bogenförmiges Beschichtungsmaterial und Trägerplatten.

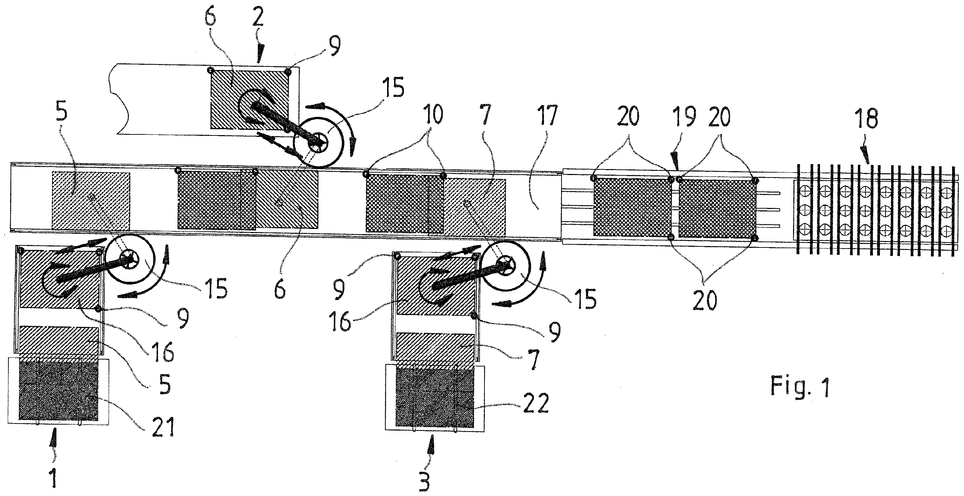

Die Vorrichtung, wie sie in Fig. 1 dargestellt ist, zeigt eine Legestraße, auf der Werkstückschichten von links nach rechts bis in eine Presse 18 transportiert werden, wobei zunächst aus einer ersten Legestation 1 von einem Arbeitsmagazin 21 mittels einer Ziehleiste ein unteres bogenförmiges Beschichtungsmaterial 5 von dem Aufnehmer 16 einer Umsetzvorrichtung 15 auf die dabei weiterlaufende Legestraße 17 abgelegt wird und bereits vor der Aufnahme des Aufnehmers 16 unter dessen Vakuumplatte oder Saugrahmen die Position des unteren bogenförmigen Beschichtungsmaterials 5 von einem fix an der Legestation 1 oder mitbeweglich an dem Aufnehmer 16 angeordneten Kamerasystem 9 detektiert wird.

In einer zweiten Legestation 2 wird eine Trägerplatte 6 von einer weiteren Umsetzvorrichtung 15 ergriffen und bei weiterlaufenden Legestraße 17 auf das zuvor aufgelegte untere bogenförmige Beschichtungsmaterial 5 aufgelegt, wobei auch hier die Lage der Trägerplatte 6 zuvor mittels eines ortsfesten Kamerasystems 9 der Legestation 2 oder eines mitbewegbaren der Umsetzvorrichtung 15 detektiert wurde, sodass in Verbindung mit einem ortsfesten Kamerasystem 10 an der Legestraße 17 ein lagerichtiges Stapeln erfolgen kann.

Von einer dritten Legestation 3 wird von einem zweiten Arbeitsmagazin 22 über eine Ziehleiste oder ein Separierband ein oberes bogenförmiges Beschichtungsmaterial 7 bereitgestellt, ebenfalls von einem Kamerasystem 9 der Legestation 3 oder des Aufnehmers 16 der dortigen Umsetzvorrichtung 15 detektiert und ebenfalls auf dem bereits zusammengelegten Werkstückstapel, bei weitertransportierter Legestraße 17 aufgelegt, woraufhin zwei fertige Werkstückstapel 23 von der Länge jeweils der halben Presse 1 nochmals von Kamerasystemen erfasst und mittels Beschickwagen 19 in die Presse 18 verfahren werden, deren unteren und oberen Pressbleche ebenfalls von Messsystemen detektiert und die aktuelle Lage der Werkstückstapel 23 damit in Übereinstimmung gebracht wird, bevor die Presstische der Presse 18 mit den daran montierten konturierten Pressblechen zusammenfahren.

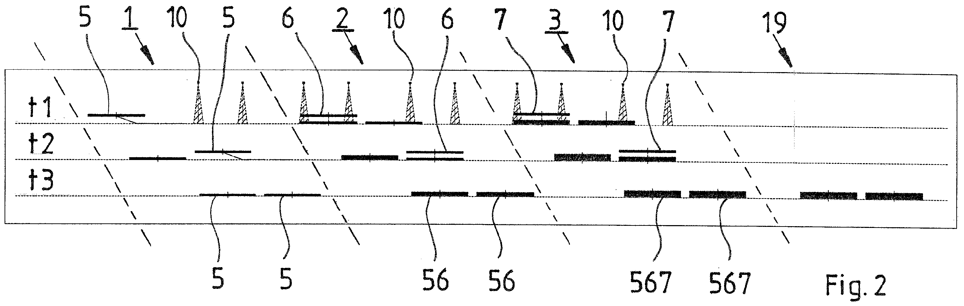

Der Verfahrensablauf dieser in Fig. 1 in einer Draufsicht von oben gezeigten Vorrichtung wird in Fig. 2 in drei übereinander geordneten Ebenen jeweils für die erste Legestation 1 des unteren bogenförmigen Beschichtungsmaterials 5, die zweite Legestation für die Trägerplatte 6 und die dritte Legestation für ein oberes bogenförmiges Beschichtungsmaterial 7 dargestellt, wobei jeweils zwei untere Beschichtungsmaterialien 5, zwei Trägerplatten 6 und zwei obere Beschichtungsmaterialien 7 nacheinander in einem so engen Abstand hintereinander auf die Legestraße 17 aufgelegt werden, dass sie in dieser Position in die Presse 18 eingefahren werden können.

Zur Durchführung des Verfahrens mit jeweils einem unteren bogenförmigen Beschichtungsmaterial 5 und zwei oberen bogenförmigen Beschichtungsmaterialien 7,8 auf einer Trägerplatte 6, wobei jeweils gleichzeitig zwei identische Werkstückstapel 23 erzeugt werden, die gemeinsam auf einen Beschickwagen 19 in eine Presse 18 eingefahren werden, ist die Vorrichtung mit insgesamt acht Legestationen 1;2;3;4;11;12;13;14 ausgestattet, die jeweils mit separaten Kamerasystemen ausgestattet sind, ebenso wie an der Legestraße 17 eine entsprechende Anzahl von separaten Kamerasystemen vorgesehen ist, wobei auch bei einer solchen Ausführungsform alle Werkstückschichten bei laufender Legestraße 17 übereinander aufgestapelt werden, sodass ein unterbrechungsfreies Verfahren bis an den Beschickwagen 19 vor der Presse 18 durchführbar ist, deren Pressgeschwindigkeit so getaktet ist, dass vor der Presse 18 kein Stau von herantransportierten Werkstückstapeln 23 entsteht.

## Patentansprüche

1. Vorrichtung zum deckungsgleichen Legen von in einer Presse miteinander zu verpressenden Werkstückschichten aus einer Legestraße (17), mindestens jeweils einer Legestation (1-4;11-14) für ein unteres bogenförmiges Beschichtungsmaterial (5), einer Trägerplatte (6) und einem oberen bogenförmigen Beschichtungsmaterial (7;8) sowie Kamerasystemen (19;20) zur Positionserkennung der einzelnen Werkstückschichten und der einzelnen Werkstückstapel, **dadurch gekennzeichnet, dass** jeder Legestation (1-4;11-16) mindestens eine Umsetzvorrichtung (15) zugeordnet ist, die mehrere räumliche Freiheitsgrade in verschiedene Raumrichtungen sowie einen Aufnehmer (16) für eine umzusetzende Werkstückschicht und ein Kamerasystem (9) aufweist und dass die Legestraße (17) kontinuierlich angetrieben ist und die Werkstückschichten kontinuierlich darauf oder auf zuvor darauf abgelegte Werkstückschichten passend ausgerichtet mitbewegt ablegbar ausgebildet sind.

2. Vorrichtung nach Anspruch 1, **dadurch gekennzeichnet, dass** zumindest ein Aufnehmer (16) von Beschichtungsmaterial (5;7) als großflächige, plane und ebene Vakuumplatte oder als großflächiger Saugrahmen mit einer Vielzahl von Saugern ausgebildet ist.

3. Vorrichtung nach Anspruch 2, **dadurch gekennzeichnet, dass** ein Aufnehmer (16) in eine parallele oder eine schiefe Lage zur Oberfläche der Legestraße (17) bewegbar oder aus einer solchen Lage in die andere Lage bewegbar ist.

4. Vorrichtung nach einem der vorgenannten Ansprüche, **dadurch gekennzeichnet, dass** für Werkstückstapel mit zwei oder x-Teillängen der wirksamen Länge einer Presse (18) mehrere erste und zweite oder x-te Legestationen (1-4;11-14) an der Legestraße (17) angeordnet sind und gemeinsam in der Presse (18) zu verpressende Werkstückstapel (23) hintereinander, bereits in Abhängigkeit der Pressplattenlänge geringfügig voneinander beabstandet synchron zu einem konturierten Pressblech der Presse (18) auf der Legestraße (17) auflegbar sind.

5. Vorrichtung nach einem der vorgenannten Ansprüche, **dadurch gekennzeichnet, dass** alle Kamerasysteme (9;10;20) in einem übergeordneten Kameraleitsystem zusammengefasst sind.

6. Verfahren zum deckungsgleichen Legen von in einer Presse miteinander zu verpressenden Werkstückschichten in einer Vorrichtung gemäß einem der vorgenannten Ansprüche, **dadurch gekennzeichnet, dass** die Kamerasysteme (9) an den Legestationen (1-4;11-14) oder den Aufnehmern (16) bereits die Ursprungsposition jeder von einer Legestation (1-4;11-14) aufzunehmenden Werkstückschicht detektieren und speichern, die dann ausgerichtet auf die kontinuierlich laufende Legestraße (17) oder auf bereits darauf aufgestapelte Werkstückschichten abgelegt wird, wobei die Positionen der Werkstückstapel wahlfrei zusätzlich von weiteren ortsfest am Legeband (17) angeordneten Kamerasystemen (10) detektiert werden kann.

7. Verfahren nach Anspruch 6, **dadurch gekennzeichnet, dass** die Vakuumplatten der Aufnehmer (16) eine Werkstückschicht entweder parallel zur Oberfläche auf der Legestraße (17) oder einer bereits darauf aufliegenden Werkstückschicht ablegen oder zunächst eine Seitenkante oder Ecke aufsetzen und erst danach die Vakuumplatte mit der daran gehaltenen Werkstückschicht in eine parallele Ablageposition auf der darunterliegenden Werkstückschicht ablegen.

8. Verfahren nach einem der vorgenannten Ansprüche 6 oder 7, **dadurch gekennzeichnet, dass** die Position der Pressbleche in der Presse (18) über ein weiteres Kamerasystem detektiert wird und der Beschickwagen (19) den oder die Werkstückstapel (23) mit ihren Dekoren deckungsgleich zwischen die oberen und unteren strukturierten Pressbleche der Presse (18) einfährt und auf dem unteren Pressblech absetzt.

## Claims

1. Apparatus for congruent laying of workpiece layers to be pressed together in a press, consisting of a laying line (17), at least in each case one laying station (1-4;11-14) for a lower sheet-type coating material (5), one support plate (6) and one upper sheet-type coating material (7;8) and also camera systems (19;20) for positional detection of the individual workpiece layers and the individual workpiece stacks, **characterized in that** each laying station (1-4;11-16) is assigned at least one transfer device (15) which has a plurality of spatial degrees of freedom in different spatial directions and also a receiver (16) for a workpiece layer to be transferred and a camera system (9) and **in that** the laying line (17) is driven continuously and the workpiece layers are designed such that they can be deposited continuously thereon or on workpiece layers previously deposited thereon and moved therewith in a properly aligned manner.

2. Apparatus according to Claim 1, **characterized in that** at least one receiver (16) of coating material (5;7) is designed as a large-area, flat and planar vacuum plate or as a large-area suction frame with a plurality of suckers.

3. Apparatus according to Claim 2, **characterized in that** a receiver (16) can be moved into a parallel or an inclined position with respect to the surface of the laying line (17) or can be moved from one such position into the other position.

4. Apparatus according to one of the preceding claims, **characterized in that**, for workpiece stacks having two or x partial lengths of the effective length of a press (18), a plurality of first and second or x laying stations (1-4;11-14) are arranged on the laying line (17), and workpiece stacks (23) to be pressed jointly in the press (18) can be placed on the laying line (17) behind one another and at a slight distance apart already in dependence on the pressing plate length and synchronously to a contoured depressing plate of the press (18).

5. Apparatus according to one of the preceding claims, **characterized in that** all camera systems (9;10;20) are combined in a superordinate camera control system.

6. Method for congruent laying, in an apparatus according to one of the preceding claims, of workpiece layers to be pressed together in a press, **characterized in that** the camera systems (9) on the laying stations (1-4;11-14) or the receivers (16) already detect and store the original position of each workpiece layer which is to be received by a laying station (1-4;11-14), which workpiece layer is then deposited in an aligned manner onto the continuously running laying line (17) or onto workpiece layers already stacked thereon, wherein the positions of the workpiece stacks can be optionally additionally detected by further camera systems (17) arranged fixedly on the laying belt (10).

7. Method according to Claim 6, **characterized in that** the vacuum plates of the receivers (16) deposit a workpiece layer either parallel to the surface on the laying line (17) or a workpiece layer already lying thereon or initially placed at a side edge or corner and only then deposit the vacuum plate with the workpiece layer held thereon into a parallel depositing position on the underlying workpiece layer.

8. Method according to either of the preceding Claims 6 and 7, **characterized in that** the position of the pressing plates in the press (18) is detected via a further camera system and the feeding carriage (19) moves the workpiece stack(s) (23) with their decorations congruently in between the upper and lower structure pressing plates of the press (18) and deposits it or them on the lower pressing plate.

## Revendications

1. Dispositif de pose en coïncidence de couches de pièce devant être assemblées par pression les unes aux autres dans une presse, lequel dispositif est constitué d'un parcours de pose (17), d'au moins un poste de pose (1-4 ; 11-14) respectif pour un matériau de revêtement inférieur arqué (5), d'une plaque de support (6) et d'un matériau de revêtement supérieur arqué (7 ; 8) ainsi que de systèmes de caméras (19 ; 20) servant à la détection de position des couches de pièce individuelles et des piles de pièces individuelles, **caractérisé en ce qu'**au moins un dispositif de transfert (15) est associé à chaque poste de pose (1-4 ; 11-16), lequel dispositif de transfert présente plusieurs degrés de liberté dans l'espace dans différentes directions spatiales et comprend un dispositif de réception (16) pour une couche de pièce à transférer et un système de caméras (9), et **en ce que** le parcours de pose (17) est entraîné en continu et les couches de pièce sont réalisées de manière à pouvoir être déposées en continu sur le parcours de pose ou sur des couches de pièce déposées préalablement sur celui-ci, de manière à se déplacer conjointement avec ceux-ci de façon orientée correctement.

2. Dispositif selon la revendication 1, **caractérisé en ce qu'**au moins un dispositif de réception (16) de matériau de revêtement (5 ; 7) est réalisé sous forme de plaque à vide plate, plane et de grande surface ou sous forme de cadre aspirant de grande surface doté d'une pluralité de dispositifs d'aspiration.

3. Dispositif selon la revendication 2, **caractérisé en ce qu'**un dispositif de réception (16) est déplaçable dans une position parallèle à la surface du parcours de pose (17) ou inclinée par rapport à celle-ci ou est déplaçable d'une telle position à l'autre position.

4. Dispositif selon l'une des revendications précédentes, **caractérisé en ce que**, pour des piles de pièces présentant deux ou x longueurs partielles de la longueur effective d'une presse (18), plusieurs premiers et deuxièmes ou x^{èmes} postes de pose (1-4 ; 11-14) sont disposés sur le parcours de pose (17) et des piles de pièces (23) devant être assemblées conjointement par pression dans la presse (18) peuvent être posées les unes derrière les autres sur le parcours de pose (17) de manière synchrone à une plaque de presse profilée de la presse (18), de manière déjà légèrement espacée les unes des autres en fonction de la longueur de plaque de presse.

5. Dispositif selon l'une des revendications précédentes, **caractérisé en ce que** tous les systèmes de caméras (9 ; 10 ; 20) sont rassemblés dans un système de guidage de caméras supérieur.

6. Procédé de pose en coïncidence de couches de pièce devant être assemblées par pression les unes aux autres dans une presse dans un dispositif selon l'une des revendications précédentes, **caractérisé en ce que** les systèmes de caméras (9) au niveau des postes de pose (1-4 ; 11-14) ou des dispositifs de réception (16) détectent et enregistrent déjà la position d'origine de chaque couche de pièce devant être reçue par un poste de pose (1-4 ; 11-14), laquelle couche de pièce est alors déposée de manière orientée sur le parcours de pose (17) circulant en continu ou sur des couches de pièce déjà empilées sur celui-ci, les positions de la pile de pièce pouvant être détectées facultativement en outre par d'autres systèmes de caméras (10) disposés fixement sur la bande de pose (17).

7. Procédé selon la revendication 6, **caractérisé en ce que** les plaques à vide des dispositifs de réception (16) déposent une couche de pièce soit parallèlement à la surface sur le parcours de pose (17) soit sur une couche de pièce reposant déjà sur celui-ci, ou posent tout d'abord un bord latéral ou un coin et déposent seulement ensuite la plaque à vide, sur laquelle la couche de pièce est retenue, sur la couche de pièce sous-jacente dans une position de pose parallèle.

8. Procédé selon l'une des revendications précédentes 6 et 7, **caractérisé en ce que** la position des plaques de presse dans la presse (18) est détectée par le biais d'un autre système de caméras et le chariot de chargement (19) insère la ou les piles de pièces (23) avec leurs décors en coïncidence entre les plaques de presse profilées supérieure et inférieure de la presse (18) et les dépose sur la plaque de presse inférieure.
